# EUROPEAN PATENT APPLICATION

(11) **EP 4 129 058 A1**
(43) Date of publication of application: **08.02.2023**
(21) Application number: 21881857.3
(22) Date of filing: 30.09.2021
(51) Int. Cl.: A01M 1/06

(54) **NEGATIVE PRESSURE BOOSTING MESH COVER AND ELECTRIC FAN MOSQUITO SWATTER**

(30) Priority: 22.10.2020 CN 202022371431 U
(71) Applicant: Zhu, Wenfeng, Qingyuan, Guangdong 511500 (CN)
(72) Inventor: Zhu, Wenfeng, Qingyuan, Guangdong 511500 (CN)
(74) Representative: Sach, Greg Robert
(86) International application number: PCT/CN2021/122315
(87) International publication number: WO 2022/083439

(57) **Abstract**

The present application provides a negative pressure boosting mesh cover and an electric fan mosquito swatter. The negative pressure boosting mesh cover comprises a bracket and a negative pressure boosting assembly, wherein the bracket is connected to the negative pressure boosting assembly, and the negative pressure boosting assembly is fixed at the air inlet of the fan cover shell. The negative pressure boosting assembly is composed of one or more negative pressure boosting bodies, which are fixed at the air inlet of the fan cover shell through brackets. Gaps between the negative pressure boosting body and the negative pressure boosting body/fan cover shell forms the ventilation openings and air passages. The technical solution of the present application expands the mosquito trapping range, enhances the suction force, and improves the mosquito trapping efficiency; on the premise that the limited power of the fan is not increased, the mosquito trapping efficiency of the fan mosquito swatter is improved through the technical treatment of the air inlet.

## Description

### TECHNICAL FIELD

The present application relates to the field of mosquito swatters, in particular to a negative pressure boosting mesh cover and an electric fan mosquito swatter.

### BACKGROUND

The mosquito-killing fan absorbs mosquitoes through the fan, and then kills the mosquitoes through the power grid. However, due to the conventional design of the air duct, the front and rear of the air duct are the same size, and the air inlet lacks technical treatment, which cannot increase the suction of the air inlet; The cross-sectional area of the air inlet is not much different from the flow area of the fan impeller, and the mosquito trapping range is relatively insufficient; On the other hand, after some mosquito-killing fans expand the air inlet into a bell mouth, the scope of mosquito trapping is increased, but the suction of the air inlet is reduced, mosquitoes are easy to escape, and the efficiency of mosquito trapping cannot be effectively improved.

### SUMMARY OF THE APPLICATION

The high-voltage electric mosquito swatter is easy to use, but there are potential safety hazards caused by high-voltage electricity. There is a lack of a mosquito swatter on the market that is as easy to use as an electric mosquito swatter without the risk of high voltage electricity.

In view of the defects existing in the prior art, the purpose of the present application is to provide a negative pressure boosting mesh cover and an electric fan mosquito swatter, which are used to solve the problem that the existing mosquito swatter has low efficiency in catching mosquitoes, and potential safety hazards caused by high voltage electricity.

In order to achieve the above object, the concrete technical solution adopted by the present invention is as follows:
An negative pressure boosting mesh cover comprises a bracket and a negative pressure boosting assembly, the bracket is connected to a negative pressure boosting assembly, and the negative pressure boosting assembly is fixed at an air inlet of a fan cover shell, and the negative pressure boosting assembly is composed of one or more negative pressure boosting bodies, which are fixed at the air inlet of the fan cover shell through brackets, and gaps between the negative pressure boosting body and the negative pressure boosting body/fan cover shell form ventilation openings and air ventilation channels.

Furthermore, the negative pressure boosting body is configured to effectively reduce the cross-sectional area of the air inlet, and its structural shape is configured to be a windshield, a cone, a streamlined spindle or a rhombus with the function of accelerating the passage of air.

Furthermore, the negative pressure boosting body is arranged obliquely, so as to make the intake of air smooth.

An electric fan mosquito swatter comprises the negative pressure boosting mesh cover, and also comprises a motor, a fan blade, a handle and a fan cover shell, the motor and the fan blade are fixed in a cavity formed by the negative pressure boosting mesh cover and the fan cover shell, the motor drives the fan blade to rotate, and the negative pressure boosting mesh cover is located on the side of the air inlet of the fan blade, the fan cover shell is a short tube that surrounds the fan, and is expanded into a bell mouth shape at the intake end, and the handle is fixed under the fan cover shell.

Furthermore, a lighting lamp is fixed on the negative pressure boosting mesh cover and a driving device for the lighting lamp is fixed inside the handle.

Furthermore, the lighting lamp is an LED lamp.

Furthermore, a fine mesh cover for collecting mosquitoes is installed on the fan cover shell.

Furthermore, the negative pressure boosting mesh cover and the fan cover shell are of an integral structure or a detachable separate structure.

Furthermore, a power supply can be installed inside the handle, and a button electrically connected to the power supply is provided on outer surface of the handle.

The beneficial effects of the utility model are as follows: the mosquito-catching range is enlarged and the mosquito-catching efficiency is improved. On the premise of not increasing the limited power of the fan, through the technical treatment of the air inlet, the mosquito catching efficiency of the fan mosquito swatter is improved.

### BRIEF DESCRIPTION OF THE DRAWINGS

In order to illustrate the embodiments of the present application or the technical solutions in the prior art more clearly, the following briefly introduces the accompanying drawings that are required to be used in the description of the embodiments or the prior art. Obviously, the drawings in the following description are only some embodiments of the present application, and for those of ordinary skill in the art, other drawings can also be obtained from these drawings without creative effort.
Fig. 1 is a schematic structural diagram of an embodiment of a negative pressure boosting mesh cover provided by an embodiment of the present application;
Fig. 2 is a schematic structural diagram of an embodiment of the electric fan mosquito swatter provided by the embodiment of the present application;
Fig. 3 is a schematic cross-sectional structural diagram of an electric fan mosquito swatter provided by an embodiment of the present application.

In the figures, 1-Bracket, 2-Negative pressure boosting assembly, 201-Negative pressure boosting body, 202- Ventilation opening, 3-Motor, 4-Fan blade; 5-Handle; 6-Fan cover shell, 7-Fine mesh cover, 8-Air inlet, 9-Ventilation channel; 10-Lighting lamp.

### DETAILED DESCRIPTION

The technical solutions in the embodiments of the present application will be clearly and completely described below with reference to the accompanying drawings in the embodiments of the present application. Obviously, the described embodiments are only a part of the embodiments of the present application, not all of the embodiments. Based on the embodiments in the present application, other embodiments obtained by those of ordinary skill in the art without creative work fall within the protection scope of the present invention.

In the description of the present application, it should be noted that the terms "vertical", "upper", "lower" and "horizontal", etc. which are used to indicate position or positional relationship are based on the position or positional relationship shown in the drawings, and are only for the convenience of describing the application and simplifying the description, rather than indicating or implying that the indicated position or element must have a specific orientation and be constructed in a specific orientation and operation, therefore cannot be understood as a limitation of the present application.

In the description of the present application, it should be noted that unless otherwise clearly specified and limited, the terms "installation", and "connection" should be understood in a broad sense, for example, it can be a fixed connection or a detachable connection, or integrally connected; it can be a mechanical connection or an electrical connection; it can be directly connected, or indirectly connected through an intermediate medium, and it can be the internal communication between two assemblies. For those skilled in the art, the specific meaning of the above-mentioned terms in the present application can be understood according to the specific circumstances.

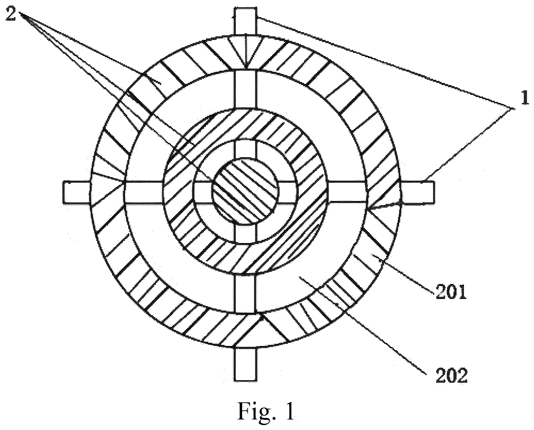

As shown in FIG. 1, the present application proposes a negative pressure boosting mesh cover, which comprises a bracket 1 and a negative pressure boosting assembly 2. The bracket 1 is connected to the negative pressure boosting assembly, and the negative pressure boosting assembly is fixed at the air inlet of a fan cover shell. The bracket 1 and the negative pressure boosting assembly 2 can be made of plastic. The air inlet 8 is in the shape of a horn, the negative pressure boosting assembly 2 is fixed at the air inlet of the fan cover shell 6 through the bracket 1, and gaps between the negative pressure boosting body 201 and the negative pressure boosting body 201/fan cover shell 6 form ventilation openings 202 and ventilation channels 9.

The negative pressure boosting body 201 is a component that can effectively reduce the cross-sectional area of the air inlet 8, and at the same time its structural shape can accelerate the passage of airflow, and can be a windshield, a cone, a streamlined spindle, a rhombus, or other components whose structural shape is beneficial to reduce airflow resistance. The negative pressure boosting body 201 could be arranged obliquely, so as to make the intake of air smooth. The ventilation openings 202 and the ventilation channels 9 between the negative pressure boosting bodies 201 must be spacious and the ventilation channels have a smooth structure. According to the aerodynamic theory, the resistance of airflow passing through can be reduced and the speed of airflow passing can be accelerated.

The air inlet 8 is configured to be a bell mouth shape, which expands the effective range of mosquito trapping. In order to make up for the decrease of the negative pressure value and the weakening of the suction force after the expansion of the air inlet 8, it is necessary to take boosting measures at the air inlet 8, and a negative pressure supercharging assembly 2 is provided for this purpose. The measure of the present application is to connect windshield or spindle or cone with a certain area in the air inlet 8 to reduce the effective ventilation area, so as to increase the negative pressure value at the remaining ventilation openings 202 and the absorption force.

In order to achieve the purpose of boosting, the total cross-sectional area of the negative pressure boosting assembly must offset the increased cross-sectional area of the air inlet 8 after expansion, so that the total cross-sectional area of the remaining ventilation opening 202 is equal to or smaller than the flow area of the fan blade 4. As a result, the suction force is not weakened after the mosquito trapping range is expanded, which improves the mosquito trapping efficiency. Under the premise of strong wind and sufficient suction, the cross-sectional area of the windshield or spindle can be appropriately reduced.

The negative pressure boosting mesh cover can be used to improve the existing electric fan mosquito swatter, expand the mosquito trapping range, and improve the mosquito trapping efficiency. On the premise that the limited power of the fan is not increased, the mosquito trapping efficiency of the fan's mosquito swatter is improved through the technical treatment of the air inlet 8.

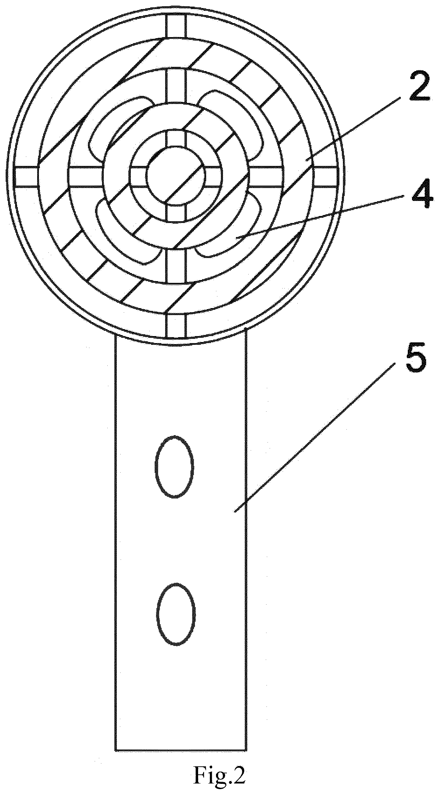

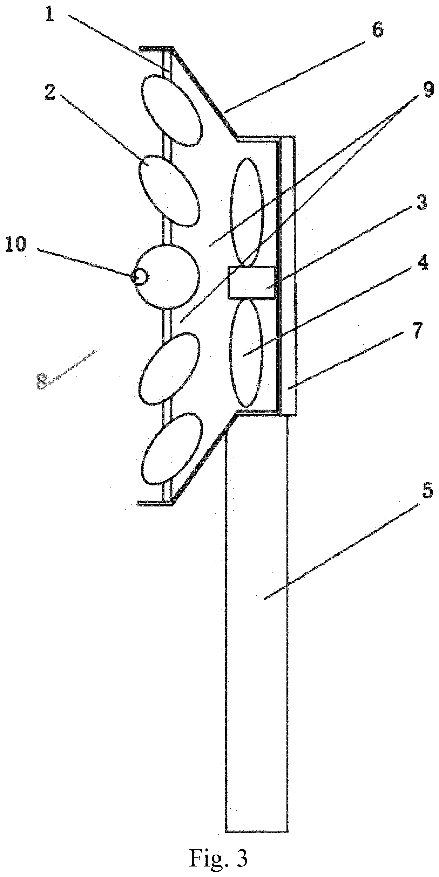

As shown in Figure 2 and Figure 3, the present application proposes an electric fan mosquito swatter, comprising the negative pressure boosting mesh cover, and also comprising a motor, a fan blade, a handle and a fan cover shell, the motor and the fan blade are fixed in a cavity formed by the negative pressure boosting mesh cover and the fan cover shell, the motor drives the fan blade to rotate, and the negative pressure boosting mesh cover is located on the side of the air inlet 8 of the fan blade, the fan cover shell is a short tube that surrounds the fan, and is expanded into a bell mouth shape at the intake end, and the handle is fixed under the fan cover shell. The mosquito swatter uses the fan blade 4 to attract airflow to capture mosquitoes, and has high mosquito trapping efficiency, is convenient and safe to use, and has no risks brought about by high-voltage electricity of the electric mosquito swatter.

A lighting lamp 10 is fixed on the negative pressure boosting mesh cover, and the driving device of the lighting lamp 10 is fixed inside the handle 5. Specifically, the lighting lamp 10 is an LED lamp, which is convenient for lighting to find mosquitoes in a dark environment, and can also attract mosquitoes.

The fan cover shell 6 is fitted with a fine mesh cover 7 for collecting mosquitoes.

The negative pressure boosting mesh cover and the fan cover shell 6 are of an integrated structure or a detachable separate structure. The detachable separate structure can be fixedly connected by screws.

A power supply can be installed inside the handle 5, and a button electrically connected to the power supply is provided on outer surface of the handle 5. The button is used to turn on the fan and lighting lamp 10.

In the implementation process, the motor 3 with small volume and sufficient power is selected to be installed on the mosquito swatter to reduce the weight. The air inlet 8 expands outwards, so that the overall shape of the mosquito swatter tends to be in the shape of a flat racket, and its weight is light and easy to swing and beat.

In the electric fan mosquito swatter according to the present application, the air inlet 8 is bell mouth shape, and the cross-sectional area of the air inlet 8 is larger than the flow area of the fan blade 4. The air inlet 8 is connected to negative pressure boosting components such as a windshield, a spindle, a cone, and a rhombus, and the total cross-sectional area of the pressure boosting assembly is greater than or equal to the increased cross-sectional area of the air inlet 8 after expansion. The pressure boosting assembly are annularly distributed and connected to the air inlet of the fan cover shell 6 through the bracket 1. The distance between the two pressure boosting assemblies is the same, and the gap between them forms annular ventilation openings 202. The annular ventilation opening 202 requires a wide entrance, so that when the airflow enters, the wind resistance is low, and the width is sufficient to pass mosquitoes.

The negative pressure boosting body 201 such as windshields, cone, and spindle is fixed in the air inlet 8 through the bracket 1. The longitudinal bulge of the upper edge of the windshield facilitates smooth air intake. In this embodiment, a ring-shaped spindle is preferred, which is beneficial to better reduce resistance, smooth airflow, and improve suction.

In order to effectively expand the mosquito trapping range within the maximum range, a gap is left between the negative pressure boosting assembly and the fan cover shell 6 to form an annular ventilation opening 202 and a ventilation channel 9.

The key points of the present application: 1. Expand the air inlet 8 of the fan mosquito swatter to increase the mosquito trapping range. 2. Increase the negative pressure value of the air ventilation opening 202, increase the suction force, and improve the mosquito trapping efficiency of the mosquito swatter. 3. The ventilation channel of the negative pressure boosting assembly 2 must be spacious, and its structural shape is designed according to aerodynamic theory to ensure smooth air flow.

Technical protection points: The air inlet 8 of the mosquito swatter has been expanded, and after increasing the mosquito trapping range, the air inlet 8 is equipped with negative pressure boosting assemblies 2 such as windshield, spindle, cone, and rhombus, so as to increase the negative pressure value of the air vent 202 formed between the pressure boosting assemblies and enhance the suction force, ensure smooth air flow, and improve the mosquito trapping efficiency.

When the windshield is used as the pressure boosting assembly in the present application, the upper edge of the windshield can be raised longitudinally, and the middle of the windshield can be folded appropriately in the longitudinal direction, and the folded angle can be outwards to reduce the resistance of airflow entering the ventilation opening 202. At this time, there are only ventilation openings 202 between the windshields and no ventilation passages, and the windshields only form ventilation passages with the fan shell.

The negative pressure boosting mesh cover in the present application can also be used in a vacuum cleaner.

The above are only the preferred embodiments of the present application, and are not intended to limit the present application. Therefore, any modification, equivalent replacement, improvement, etc. made to the above embodiments according to the technical practice of the present application still fall within the scope of the technical solution of the present application.

## Claims

1. A negative pressure boosting mesh cover, comprising a bracket and a negative pressure boosting assembly, the bracket is connected to a negative pressure boosting assembly, and the negative pressure boosting assembly is fixed at an air inlet of a fan cover shell, and the negative pressure boosting assembly is composed of one or more negative pressure boosting bodies, which are fixed at the air inlet of the fan cover shell through brackets, and gaps between the negative pressure boosting body and the negative pressure boosting body/fan cover shell form ventilation openings and ventilation channels.

2. The negative pressure boosting mesh cover according to claim 1, wherein the negative pressure boosting body is configured to effectively reduce the cross-sectional area of the air inlet, and its structural shape is configured to be a cone, a streamlined spindle or a rhombus with the function of accelerating the passage of air.

3. The negative pressure boosting mesh cover according to claim 1, wherein the negative pressure boosting body is arranged obliquely, so as to make the intake air smooth.

4. An electric fan mosquito swatter, comprising the negative pressure boosting mesh cover according to claim 1, and also comprises a motor, a fan blade, a handle and a fan cover shell, the motor and the fan blade are fixed in a cavity formed by the negative pressure boosting mesh cover and the fan cover shell, the motor drives the fan blade to rotate, and the negative pressure boosting mesh cover is located on the side of the air inlet of the fan blade, the fan cover shell is a short tube that surrounds the fan, and is expanded into a bell mouth shape at the intake end, and the handle is fixed under the fan cover shell.

5. The electric fan mosquito swatter according to claim 4, wherein a lighting lamp is fixed on the negative pressure boosting mesh cover and a driving device for the lighting lamp is fixed inside the handle.

6. The electric fan mosquito swatter according to claim 5, wherein the lighting lamp is an LED lamp.

7. The electric fan mosquito swatter according to claim 4, wherein a fine mesh cover for collecting mosquitoes is installed on the fan cover shell.

8. The electric fan mosquito swatter according to claim 4, wherein the negative pressure boosting mesh cover and the fan cover shell are of an integral structure or a detachable separate structure.

9. The electric fan mosquito swatter according to claim 4, wherein a power supply can be installed inside the handle, and a button electrically connected to the power supply is provided on outer surface of the handle.
